# EUROPÄISCHE PATENTSCHRIFT

(11) **EP 3 575 243 B1**
(45) Veröffentlichungstag und Bekanntmachung des Hinweises auf die Patenterteilung: **27.07.2022**
(21) Anmeldenummer: 19177342.3
(22) Anmeldetag: 29.05.2019
(51) Int. Cl.: B65G 1/04, B65G 1/08, B65G 47/69, B65G 43/08, B65G 1/137, B65G 47/61, B07C 5/36

(54) **KOMMISSIONIERANLAGE UND VERFAHREN ZUM BETRIEB EINER KOMMISSIONIERANLAGE**
PICKING SYSTEM AND METHOD FOR OPERATING SAME
INSTALLATION DE PRÉPARATION DE COMMANDES ET PROCÉDÉ DE FONCTIONNEMENT D'UNE INSTALLATION DE PRÉPARATION DE COMMANDES

(30) Priorität: 01.06.2018 CH 6982018
(43) Veröffentlichungstag der Anmeldung: 04.12.2019
(73) Patentinhaber: FERAG AG, 8340 Hinwil (CH)
(72) Erfinder: SIGRIST, Sergio, 8340 Hinwil (CH)
(74) Vertreter: Rentsch Partner AG

(56) Entgegenhaltungen:
- EP-A1- 0 254 261
- WO-A1-95/10368
- WO-A1-2017/192783
- US-A1- 2003 141 165

## Beschreibung

### GEBIET DER ERFINDUNG

Die vorliegende Erfindung bezieht sich auf das Gebiet der Intralogistik und betrifft eine Kommissionieranlage und ein Verfahren zum Betrieb einer solchen Kommissionieranlage.

### HINTERGRUND DER ERFINDUNG

Bei der Kommissionierung werden Waren nach vorgegebenen Aufträgen aus einem Warensortiment zusammengestellt, wobei verschiedene Kommissioniermethoden wie z.B. auftragsorientierte oder serienorientierte Kommissionierung, serielle oder parallele Kommissionierung etc. zum Einsatz kommen. Aufgrund der zunehmenden Anzahl von unterschiedlichen Waren und der Aufträge spielen dabei Sortierprozesse eine wichtige Rolle, wobei es erwünscht ist, die Kommissionierleistung, insbesondere anhand kurzer Durchlaufzeiten und/oder der Optimierung der Wege, hoch zu halten oder weiter zu erhöhen. Gleichzeitig soll die Prozesssicherheit der Kommissionierung sichergestellt werden.

Ein Verfahren zum Sortieren von Einzelstücken und eine Sortieranlage wird in der WO95/10368 A1 beschrieben und zeigt als nächstliegender Stand der Technik den Oberbegriff vom Anspruch 1 und 9.

Beim Verfahren wird einer Identifikationsnummer eines Einzelstückes eine Platzhalternummer zugeordnet entsprechend der gewünschten Position im Strom der Einzelstücke, und in vier Sammelzonen mit jeweils einer bestimmten Menge Staulinien darin erfolgt eine Sortierung gemäß der Platzhalternummer und deren Bestandteilen. Die Ausschleusung der Einzelstücke kann dann in der Reihenfolge der gewünschten Identifikationsmerkmale vorgenommen werden. Die dazugehörige Anlage weist eine Steuerungseinrichtung auf, die den Stückestrom in den einzelnen Sammelzonen und Staulinien in der gewünschten Weise begrenzen.

Zur Sortierung der Waren, insbesondere wenn die Waren eines Auftrags oder eine Mehrzahl von Aufträgen in einer bestimmten Reihenfolge an der Versandstation vorliegen sollen, können Matrixsortierer eingesetzt werden, welche eine willkürliche Reihenfolge von mit Waren bestückten Transporteinheiten in eine vorgegebene Reihenfolge sortieren. Üblicherweise erfordert ein Matrixsortierer einen hohen apparativen Aufwand, wenn eine Vielzahl von Versandplätzen mit den auftragsgemässen Warenzusammenstellungen bedient werden müssen. Ferner wird die Kommissionierleistung typischerweise durch die Sortierleistung bzw. die Förderleistung im Matrixsortierer begrenzt, da u.a. aufgrund der grossen Anzahl von Weichen regelmässig Totzeiten entstehen.

### DARSTELLUNG DER ERFINDUNG

Es ist daher eine Aufgabe der Erfindung, ein Verfahren zum Betrieb einer Kommissionieranlage und eine Kommissionieranlage bereitzustellen, welche den Stand der Technik bezüglich der Kommissionierleistung mindestens teilweise verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Die Erfindung betrifft ein Verfahren zum Betrieb einer Kommissionieranlage, umfassend: Bereitstellen von zu Batches zusammengestellten Waren in einem Batchpuffer, Sortieren der Waren in einem Matrix-Sortierer, wobei die Waren in der Kommissionieranlage durch eine Mehrzahl von Transporteinheiten gefördert werden, welche jeweils eine Aufnahmeeinheit zur Aufnahme der Waren aufweisen, und die Transporteinheiten im Matrix-Sortierer mindestens abschnittsweise durch einen Matrixförderer gefördert werden, dadurch gekennzeichnet, dass eine Steuerung die Fördergeschwindigkeit des Matrixförderers dynamisch derart steuert, dass die Fördergeschwindigkeit von mindestens einem Parameter der geförderten Transporteinheiten und/oder Waren abhängt und die Waren im Matrix-Sortierer batchweise sortiert werden.

Mit der Zusammenstellung der Waren zu Batches können Anforderungen aus mehreren Aufträgen batchweise gesammelt und gemeinsam abgearbeitet werden. In einem Batch befinden sich in der Regel alle Waren, welche zu einer bestimmten Anzahl Aufträgen gehören, welche Waren und/oder Aufträge aber noch unsortiert sind. Zum Beispiel können sich in einem Batch alle Waren befinden, welche zu 20 bestimmten Aufträgen gehören, wobei jeder Auftrag zwischen vier bis fünf Waren umfasst. Der Matrix-Sortierer sortiert vorzugsweise zunächst die Aufträge eines Batches, so dass die Aufträge z.B. in einer nachfolgenden Verpackungsstation sortiert vorliegen. Vorteilhafterweise sortiert der Matrix-Sortierer auch die Waren innerhalb eines Auftrags, damit Waren eines Auftrags an der Verpackungsstation sortiert vorliegen. Zum Beispiel kann es vorteilhaft sein, innerhalb eines Auftrags die Waren der Grösse nach, z.B. absteigend, zu sortieren, um das Verpacken in der Verpackungsstation zu vereinfachen. Ferner kann der Matrixsortierer durch die Aufteilung der Waren in Batches und der batchweisen Sortierung der Waren klein gehalten werden, was den apparativen Aufwand und insbesondere die erforderlichen Wege verkleinert. In der Regel werden die im Batchpuffer bereitgestellten Batches durch den Matrix-Sortierer abgerufen und sequentiell abgearbeitet, d.h. ein Batch wird vorzugsweise zumindest in einer Sortierstufe vollständig abgearbeitet, bevor der nächste Batch abgerufen wird.

Bei der Auslegung einer Kommissionieranlage spielen in der Regel die Parameter der in der Kommissionieranlage geförderten Transporteinheiten und/oder der Waren eine wichtige Rolle. Insbesondere haben die Parameter der geförderten Transporteinheiten und/oder Waren dabei einen Einfluss auf die Fördergeschwindigkeit von Förderern der Kommissionieranlage und somit die erzielbare Kommissionierleistung bzw. der erzielbare Warendurchsatz. Herkömmlich wird aber die Fördergeschwindigkeit innerhalb der Kommissionieranlage einmal festgelegt und für alle Förderer in der Kommissionieranlage konstant gehalten, so dass die Kommissionieranlage üblicherweise weit unter der maximal erzielbaren Kommissionierleistung läuft. Durch die dynamische Steuerung der Fördergeschwindigkeit des Matrixförderers in Abhängigkeit von mindestens einem Parameter der geförderten Transporteinheiten und/oder Waren kann die Kommissionierleistung, welche insbesondere durch die Sortierleistung des Matrix-Sortierers, z.B. durch die entstehenden Totzeiten, begrenzt wird, optimiert werden.

Die Fördergeschwindigkeit des Matrixförderers kann in Abhängigkeit eines Parameters der geförderten Transporteinheiten und/oder Waren bei Bedarf erhöht werden, um die Waren innerhalb des Matrix-Sortierers schneller zu fördern und so z.B. langsame Sortiervorgänge ausgleichen zu können. Alternativ kann die Fördergeschwindigkeit des Matrixförderers reduziert werden, falls spezifische Parameter der Transporteinheiten und/oder Waren eine tiefere Fördergeschwindigkeit der Transporteinheiten und/oder Waren innerhalb des Matrix-Sortierers erfordern.

In einer Aufnahmeeinheit einer Transporteinheit kann jeweils eine Ware oder können mehrere Waren aufgenommen werden. Die Steuerung kann die Fördergeschwindigkeit des Matrixförderers auf die geförderten Transporteinheiten samt den in den entsprechenden Aufnahmeeinheiten aufgenommenen Waren anpassen. Alternativ kann die Steuerung die Parameter der Transporteinheiten als Offset mitberücksichtigen und die Fördergeschwindigkeit auf einen Parameter der geförderten Waren anpassen.

In einer Ausführungsform steuert die Steuerung die Fördergeschwindigkeit des Matrixförderers derart, dass die Fördergeschwindigkeit innerhalb eines Batches jeweils konstant ist.

Für die Steuerung reicht es daher vorteilhafterweise aus, die Fördergeschwindigkeit des Matrixförderers lediglich von einem Batch zu einem nächsten Batch anzupassen, was den Steueraufwand reduziert. Vorteilhafterweise steuert die Steuerung die Fördergeschwindigkeit jeweils in Abhängigkeit eines Parameters einer einzelnen, repräsentativen Transporteinheit und/oder Ware innerhalb eines Batches.

Vorzugsweise passt die Steuerung die Fördergeschwindigkeit auf denjenigen Parameter oder diejenige Transporteinheit und/oder Ware innerhalb eines Batches an, welcher bzw. welche den grössten Einfluss auf die Kommissionierleistung hat.

In einer Ausführungsform steuert die Steuerung die Fördergeschwindigkeit des Matrixförderers in Abhängigkeit des Gewichts von mindestens einer der geförderten Transporteinheiten und/oder Waren, wobei die Fördergeschwindigkeit des Matrixförderers mit abnehmendem Gewicht der Transporteinheiten und/oder Waren erhöht wird.

Gemäss dieser Ausführungsform ist daher der Parameter, von welchem die Fördergeschwindigkeit des Matrixförderers abhängt, daher das Gewicht der geförderten Transporteiheiten und/oder Waren. In der Regel wird die Fördergeschwindigkeit der Förderer in der Kommissionieranlage auf das Gewicht der geförderten Transporteinheiten und/oder Waren derart eingestellt, dass die Fördergeschwindigkeit mit zunehmendem Gewicht der Transporteinheiten und/oder Waren reduziert wird. Da die Waren mit einem hohen Gewicht typischerweise einen kleinen prozentualen Anteil am ganzen Sortiment ausmachen, läuft die Kommissionieranlage häufig mit einer Fördergeschwindigkeit, welche zwar an die Waren mit einem hohen Gewicht angepasst ist, aber die erzielbare Kommissionierleistung der Kommissionieranlage nicht ausreichend ausnutzt. Mit der dynamischen Steuerung der Fördergeschwindigkeit des Matrixförderers kann daher vorteilhafterweise die Kommissionierleistung optimiert werden, da für leichtere Waren bzw. Transporteinheiten mit Waren die Fördergeschwindigkeit des Matrixförderers erhöht werden kann.

In einer Ausführungsform werden die Waren mit einem hohen Gewicht, z.B. mit einem Gewicht höher als ein gewisser Schwellenwert *m₁*, in separate Batches zusammengefasst. Zum Beispiel kann der Schwellenwert *m₁* derart gewählt werden, dass die Batches mit den Waren mit einem Gewicht > *m₁* diejenigen Batches sind, für welche die Fördergeschwindigkeit des Matrixförderers im Vergleich zu weiteren Förderern der Kommissionieranlage nicht erhöht werden sollte. Das Zusammenfassen von Waren mit einem hohen Gewicht in separate Batches bietet den Vorteil, dass insgesamt die Anzahl Batches mit Waren von hohem Gewicht reduziert und die Anzahl von Batches mit Waren von leichtem Gewicht erhöht werden kann, so dass für eine höhere Anzahl von Batches eine höhere Fördergeschwindigkeit des Matrixförderers eingestellt werden kann.

Besonders vorteilhaft ist die dynamische Steuerung der Fördergeschwindigkeit für die batchweise Sortierung der Waren, da der Matrix-Sortierer die Batches sequentiell abarbeitet und die Fördergeschwindigkeit entsprechend auf die Waren in einem Batch angepasst werden kann. Mit einer Anpassung der Fördergeschwindigkeit auf eine repräsentative Transporteinheit und/oder Ware innerhalb eines Batches, so dass die Fördergeschwindigkeit innerhalb eines Batches jeweils konstant ist, kann wie bereits beschrieben zudem der Steueraufwand reduziert werden.

In einer Ausführungsform steuert die Steuerung die Fördergeschwindigkeit des Matrixförderers in Abhängigkeit des Gewichts der schwersten Transporteinheit und/oder Ware eines Batches.

Da die Fördergeschwindigkeit in der Regel mit zunehmendem Gewicht der geförderten Waren tiefer eingestellt wird, kann durch die Anpassung der Fördergeschwindigkeit auf das Gewicht der schwersten Transporteinheit und/oder Ware eines Batches sichergestellt werden, dass die Fördergeschwindigkeit innerhalb eines Batches nicht zu hoch für die Anforderungen des Matrix-Sortierers bzw. des Matrixförderers ist.

Alternativ oder in Ergänzung steuert die Steuerung die Fördergeschwindigkeit des Matrixförderers in Abhängigkeit der Grösse von mindestens einer der geförderten Transporteinheiten und/oder Waren, wobei die Fördergeschwindigkeit des Matrixförderers mit abnehmender Grösse der Transporteinheiten und/oder Waren erhöht wird.

Gemäss dieser Ausführungsform ist daher der Parameter, von welchem die Fördergeschwindigkeit des Matrixförderers abhängt, daher die Grösse der geförderten Transporteinheiten und/oder Waren. Die Grösse der Transporteinheiten und/oder der Waren kann die Ausdehnung der Transporteinheiten und/oder der Waren quer zur und/oder entlang der Förderrichtung des Matrixförderers sein.

In einer Ausführungsform steuert die Steuerung die Fördergeschwindigkeit des Matrixförderers in Abhängigkeit der Grösse der grössten Transporteinheit und/oder Ware eines Batches.

In einer Ausführungsform weist die Kommissionieranlage, vorzugsweise in einer Aufgabestation und/oder in einer dem Matrix-Sortierer nachgeschalteten Packstation, weitere Förderer, vorzugsweise Umlaufförderer, auf, welche die Transporteinheiten mit einer konstanten Fördergeschwindigkeit fördern und die Steuerung steuert die Fördergeschwindigkeit des Matrixförderers derart, dass die Fördergeschwindigkeit des Matrixförderers in mindestens einem Batch höher als die konstante Fördergeschwindigkeit der weiteren Förderer ist.

Die weiteren Förderer dienen typischerweise dazu, die Waren von einem Warenlager oder einer Aufgabestation abzurufen, in einen oder mehreren dem Matrix-Sortierer vorgelagerten oder vorgelagerte Speicher und/oder Puffer zu fördern und von diesem oder diesen wieder abzurufen, sowie die sortierten Waren vom Matrix-Sortierer abzurufen und z.B. in eine nachgeschaltete Packstation oder Versandstation zu fördern.

Die Fördergeschwindigkeit der weiteren Förderer ist dabei in der Regel auf einen bestimmten Parameter der geförderten Transporteinheiten und/oder Waren angepasst. Zum Beispiel kann die Fördergeschwindigkeit der weiteren Förderer auf das Gewicht der schwersten Ware eingestellt sein. Da die schwersten Waren üblicherweise nur einen kleinen prozentualen Anteil am Gesamtsortiment ausmachen, bietet die dynamische Steuerung der Fördergeschwindigkeit den Vorteil, dass die Fördergeschwindigkeit des Matrixförderers, vorzugsweise batchweise, an die Waren mit kleinerem Gewicht angepasst werden kann und somit die Kommissionierleistung optimiert werden kann. Insbesondere kann die Reduktion der Kommissionierleistung durch die begrenzte Sortierleistung bzw. Förderleistung des Matrix-Sortierers durch eine Erhöhung der Fördergeschwindigkeit des Matrixförderers für leichtere Waren ausgeglichen werden.

In einer Ausführungsform werden die Parameter, vorzugsweise Gewicht und/oder Grösse, der in den Matrix-Sortierer einfahrenden Transporteinheiten und/oder Waren durch eine Messvorrichtung ermittelt und der Steuerung übermittelt.

Bei der Ermittlung der Parameter der in den Matrix-Sortierer einfahrenden Transporteinheiten ermittelt die Messvorrichtung in der Regel die Parameter der mit Waren bestückten Transporteinheiten.

Zur Ermittlung des Gewichts kann die Messvorrichtung eine Wiegevorrichtung umfassen. Zum Beispiel kann die Wiegevorrichtung eine Haltevorrichtung umfassen, welche eine Transporteinheit mit einer Ware ergreift und diese Transporteinheit wägt.

In einer Ausführungsform umfasst die Wiegevorrichtung eine Haltevorrichtung, welche mit einem Abschnitt einer Schiene verbunden ist und den Abschnitt der Schiene zusammen mit einer Transporteinheit und einer darin enthaltenen Ware wägen kann, welche sich auf dem betreffenden Abschnitt befindet.

In einer Ausführungsform umfasst die Wiegevorrichtung eine Plattform, welche die Transporteinheit in eine Richtung anhebt, z.B. bei einer hängend geförderten Transporteinheit von unten nach oben, und so das Gewicht der Transporteinheit mit der Ware ermittelt.

Die Wiegevorrichtung kann direkt nach einer Aufgabestation, in welcher die Transporteinheiten mit Waren bestückt werden, angeordnet sein, was den Vorteil bietet, dass die Steuerung das Gewicht der bestückten Transporteinheiten kennt und die Transporteinheiten gleich nach der Bestückung entsprechend zu nach Gewicht vorsortierten Batches zusammengefasst werden können.

Zur Ermittlung der Grösse kann die Messvorrichtung mindestens einen optischen Sensor umfassen, z.B. Lichtschranken, welcher die Ausdehnung der Transporteinheit und/oder der Ware ermittelt.

In einer Ausführungsform weisen die Transporteinheiten und/oder die Waren Identifikationselemente auf, wobei die Messvorrichtung eine Auslesevorrichtung umfasst, mit welcher die Identifikationselemente ausgelesen werden können. Die Identifikationselemente können Barcodes, QR Codes, RFID Tags etc. umfassen.

Vorzugsweise übermittelt die Messvorrichtung nach der Auslesung der Identifikationselemente die ausgelesenen Identifikations-Informationen an die Steuerung. Die Steuerung kann die Identifikations-Informationen mit einem durch die Messvorrichtung ermittelten Parameter, z.B. einem Gewicht oder einer Grösse, der Transporteinheit und/oder der Ware verknüpfen und die Fördergeschwindigkeit des Matrixförderers anpassen, sobald die Transporteinheit und/oder die Ware mit dieser Identifikations-Information in den Matrix-Sortierer einfährt.

Zu diesem Zweck ist vorzugsweise vor dem Matrix-Sortierer eine weitere Auslesevorrichtung angeordnet, welche die Identifikationselemente der in den Matrix-Sortierer einfahrenden Transporteinheiten und/oder Waren ausliest und die Identifikations-Informationen an die Steuerung übermittelt, um das Einfahren der entsprechenden Transporteinheiten und/oder der Waren in den Matrix-Sortierer festzustellen.

In einer Ausführungsform erhält die Steuerung die Parameter, vorzugsweise Gewicht und/oder Grösse, der in den Matrix-Sortierer einfahrenden Transporteinheiten und/oder Waren von einer Datenbank.

Vorzugsweise werden in der Kommissionieranlage alle Waren mit der gleichen Art oder mit einer beschränkten Anzahl von Arten von Transporteinheiten gefördert. Das Gewicht der in den Matrix-Sortierer einfahrenden mit Waren bestückten Transporteinheiten kann eine Summe des Gewichts der leeren Transporteinheiten und des Gewichts der jeweiligen Waren sein. In der Datenbank können daher die Parameter der leeren Transporteinheiten abgelegt sein, welche von der Steuerung bei der Anpassung der Fördergeschwindigkeit zusätzlich zu den Parametern der Waren mitberücksichtigt werden. Alternativ können die Parameter der leeren Transporteinheiten bereits in der Steuerung der Fördergeschwindigkeit als Offset mitberücksichtigt sein und in der Datenbank lediglich die Parameter der Waren wie z.B. Gewicht und/oder Grösse abgelegt sein.

Vorzugsweise weisen die Transporteinheiten und/oder die Waren Identifikationselemente auf, welche mit Auslesevorrichtungen ausgelesen werden können, und welche Auslesevorrichtungen die ausgelesenen Identifikations-Informationen an die Steuerung übermitteln, welche die Identifikations-Informationen mit den von der Datenbank erhaltenen Parametern verknüpft.

In einer Ausführungsform umfasst der Matrix-Sortierer eine Mehrzahl von Sortierstufen, wobei der Matrixförderer die Transporteinheiten jeweils einer Sortierstufe zu- und wieder von der Sortierstufe wegführt.

Vorzugsweise ist der Matrixförderer als Umlaufförderer ausgebildet.

In einer Ausführungsform umfasst der Matrix-Sortierer eine Mehrzahl von Sortierstufen und eine Mehrzahl von Matrixförderern, welche jeweils einer Sortierstufe oder zwei Sortierstufen zugeordnet sind und die Steuerung steuert individuell die Fördergeschwindigkeit jedes Matrixförderers.

Durch das individuelle Steuern der Fördergeschwindigkeit jedes Matrixförderers kann die Optimierung der Kommissionierleistung innerhalb des Matrix-Sortierers weiter erhöht werden.

Falls sich zum Beispiel ein Batch mit schweren Waren, für welchen die Fördergeschwindigkeit des Matrixförderers nicht erhöht wird, in der letzten Sortierstufe des Matrix-Sortierers befindet, kann die Fördergeschwindigkeit des Matrixförderers der ersten Sortierstufe bereits erhöht werden, falls der in die erste Sortierstufe einfahrende nächste Batch aus leichteren Waren besteht, womit die Kommissionierleistung weiter optimiert werden kann.

Die Erfindung betrifft weiter eine Kommissionieranlage, umfassend einen Batchpuffer zur Bereitstellung von zu Batches zusammengestellten Waren, einen Matrix-Sortierer eine Mehrzahl von Transporteinheiten, welche jeweils eine Aufnahmeeinheit zur Aufnahme der Waren aufweisen, der Matrix-Sortierer umfassend mindestens einen Matrixförderer zum Fördern der Transporteinheiten, dadurch gekennzeichnet, dass die Kommissionieranlage eine Steuerung aufweist, welche ausgelegt ist, die Fördergeschwindigkeit des Matrixförderers dynamisch derart zu steuern, dass die Fördergeschwindigkeit von mindestens einem Parameter der geförderten Transporteinheiten und/oder Waren abhängt und die Waren vom Matrix-Sortierer batchweise sortiert werden.

In einer Ausführungsform umfasst eine Transporteinheit jeweils mindestens einen in einer Schiene, vorzugsweise hängend, förderbaren Laufwagen und die Aufnahmeeinheit ist jeweils mit dem Laufwagen verbunden.

In einer Ausführungsform umfasst eine Transporteinheit jeweils einen einzelnen Laufwagen und eine mit dem Laufwagen verbundene Aufnahmeeinheit.

In einer Ausführungsform umfasst eine Transporteinheit jeweils zwei Laufwagen, welche miteinander verbunden sind und ein Trolley bilden, wobei die Transporteinheit eine Aufnahmeeinheit umfasst, welche mit dem Trolley verbunden ist.

In einer Ausführungsform ist die Steuerung ausgelegt, die Fördergeschwindigkeit des Matrixförderers derart zu steuern, dass die Fördergeschwindigkeit von der Anzahl Laufwagen pro Transporteinheit abhängt.

Die Aufnahmeeinheit kann eine Tasche, ein Behälter, ein Haken, ein Bügel, ein Korb, ein Teller etc. umfassen.

Die Kommissionieranlage umfasst vorzugsweise Schienen, in welchen die Laufwagen förderbar sind. Vorzugsweise umfasst der Matrixförderer und/oder die weiteren Förderer antreibbare Ketten, welche Mitnehmerelemente umfassen, mit welchen die Laufwagen zur Förderung der Laufwagen mitnehmbar sind.

In einer Ausführungsform weist die Kommissionieranlage, vorzugsweise in einer Aufgabestation und/oder in einer dem Matrix-Sortierer nachgeschalteten Packstation, weitere Förderer, vorzugsweise Umlaufförderer, auf, welche ausgelegt sind, die Transporteinheiten mit einer konstanten Fördergeschwindigkeit zu fördern, wobei die Steuerung ausgelegt ist, die Fördergeschwindigkeit des Matrixförderers derart zu steuern, dass die Fördergeschwindigkeit des Matrixförderers in mindestens einem Batch höher als die konstante Fördergeschwindigkeit der weiteren Förderer ist.

In bestimmten Ausführungsformen ist die Steuerung ausgelegt, die Fördergeschwindigkeit des Matrixförderers derart zu steuern, dass die Fördergeschwindigkeit des Matrixförderers für mindestens einen Batch mindestens 30%, bevorzugt mindestens 40%, besonders bevorzugt mindestens 50%, höher als die konstante Fördergeschwindigkeit der Förderer ist.

In einer Ausführungsform ist der Matrixförderer ein Umlaufförderer, welcher ausgelegt ist, die Transporteinheiten einer Sortierstufe zu- und/oder von einer Sortierstufe wegzuführen.

In einer Ausführungsform weist eine Sortierstufe des Matrix-Sortierers eine Mehrzahl von linearen Pufferstrecken auf, welche durch Weichen mit dem Matrixförderer verbunden sind.

Vorzugsweise sind die linearen Pufferstrecken am Eingang mittels einer Eingangsweiche und am Ausgang mittels einer Ausgangsweiche mit dem Matrixförderer verbunden und verlaufen jeweils geradlinig, insbesondere schlaufenfrei, zwischen Eingangsweiche und Ausgangsweiche.

In einer Ausführungsform sind die Pufferstrecken als Gravitationsstrecken mit einem Gefälle derart ausgebildet, dass die Transporteinheiten in den Gravitationsstrecken schwerkraftbedingt förderbar sind.

In einer Ausführungsform weist der Batchpuffer eine Mehrzahl von linearen Speicherstrecken auf, in welche vorzugsweise jeweils ein Batch oder zwei Batches einspeicherbar sind.

Alternativ oder in Ergänzung können in den linearen Speicherstrecken des Batchpuffers drei oder vier Batches einspeicherbar sein.

Durch den Batchpuffer können die zu sortierenden Waren in Batches aufgeteilt werden. Der Matrix-Sortierer kann durch den Matrixförderer die Batches vom Batchpuffer abrufen und die Batches sequentiell abarbeiten. Der Batchpuffer bietet zudem den Vorteil, dass die erforderlichen Wege reduziert werden können. Vorzugsweise verbindet der Matrixförderer den Batchpuffer mit mindestens einer ersten Sortierstufe des Matrix-Sortierers.

In einer Ausführungsform ist vor dem Batchpuffer ein Speicher angeordnet, welcher eine Mehrzahl von linearen Speicherstrecken aufweist.

Vorzugsweise ist der Speicher ausgelegt, die Waren vorzusortieren, wobei ein Förderer, vorzugsweise ein Umlaufförderer, zwischen dem Speicher und dem Batchpuffer angeordnet ist und die vorsortierten Waren aus dem Speicher abruft und dem Batchpuffer zuführt.

In einer Ausführungsform umfasst der Speicher einen dynamischen Speicher zur Zwischenspeicherung der für die Kommissionierung bereitgestellten Waren und einen dem dynamischen Speicher nachgeschalteten Abrufspeicher zum Speichern von aus dem dynamischen Speicher ausgespeicherten und dabei vorsortierten Waren, welche innerhalb eines gemeinsamen Umlaufförderers angeordnet sind und über den gemeinsamen Umlaufförderer miteinander in Verbindung stehen.

In einer Ausführungsform weist der Umlaufförderer eine Mehrzahl von Förderstrecken auf, und der dynamische Speicher und der Abrufspeicher werden jeweils durch eine Mehrzahl von als Stiche von vorgegebenen Förderstrecken des Umlaufförderers abgehenden Speicherstrecken gebildet.

In einer Ausführungsform ist der Speicher zwischen einem Verteilsystem und dem Batchpuffer angeordnet, wobei die in einer Aufgabestation mit Waren bestückten Transporteinheiten durch das Verteilsystem in den Speicher eingespeichert werden.

In einer Ausführungsform ist nach dem Matrix-Sortierer ein Packpuffer angeordnet, welcher vorzugsweise durch den Matrixförderer mit einer letzten Sortierstufe des Matrix-Sortierers verbunden ist.

Die Kommissionieranlage kann eine Mehrzahl von Matrix-Sortierern umfassen, wobei jedem Matrix-Sortierer ein Batchpuffer und vorteilhafterweise ein Speicher vorgeschaltet sein kann. Das Verteilsystem ist vorteilhafterweise ausgebildet, die mit Waren bestückten Transporteinheiten an die verschiedenen Matrix-Sortierer, bzw. die vorgeschalteten Batchpuffer oder Speicher, zu verteilen.

In einer Ausführungsform ist vor dem Matrix-Sortierer mindestens eine Messvorrichtung angeordnet, welche ausgebildet ist, die Parameter, vorzugsweise das Gewicht und/oder die Grösse, der in den Matrix-Sortierer einfahrenden Transporteinheiten und/oder Waren zu ermitteln und der Steuerung zu übermitteln.

In einer Ausführungsform weist die Kommissionieranlage eine Datenbank auf, in welcher die Parameter, vorzugsweise das Gewicht und/oder die Grösse, der in den Matrix-Sortierer einfahrenden Transporteinheiten und/oder Waren, hinterlegt sind.

In einer Ausführungsform umfasst der Matrix-Sortierer eine Mehrzahl von Sortierstufen und eine Mehrzahl von Matrixförderern, welche jeweils einer Sortierstufe oder zwei Sortierstufen zugeordnet sind und die Steuerung ist ausgelegt, die Fördergeschwindigkeit jedes Matrixförderers individuell zu steuern.

### LISTE DER FIGUREN

Ausführungsformen der Erfindung werden anhand der nachfolgenden Figuren und der dazugehörigen Beschreibung näher erläutert. Es zeigen:
- Fig. 1: eine schematische Darstellung einer Ausführungsform einer Kommissionieranlage mit einem Matrix-Sortierer;
- Fig. 2: eine schematische Darstellung einer weiteren Ausführungsform einer Kommissionieranlage mit einem Matrix-Sortierer;
- Fig. 3: eine vergrösserte Ansicht eines Ausschnitts der Kommissionieranlage aus Fig. 1;
- Fig. 4: ein Flussdiagramm einer Ausführungsform eines Verfahrens zum Betrieb einer Kommissionieranlage;
- Fig. 5: ein Ausschnitt einer Ausführungsform einer Kommissionieranlage mit einer Wiegevorrichtung sowie Ausführungsformen von Transporteinheiten.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

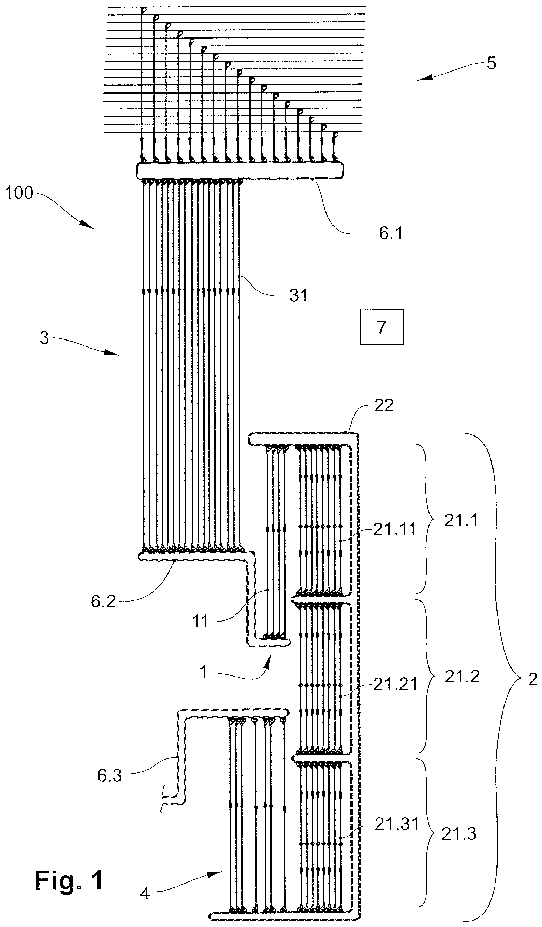

Figur 1 zeigt eine schematische Darstellung einer Ausführungsform einer Kommissionieranlage 100 umfassend einen Batchpuffer 1, einen Matrix-Sortierer 2, einen Speicher 3 und einen Packpuffer 4. Der Speicher 3 ist dem Batchpuffer 1 vorgeschaltet und dient zur Einspeicherung von mit Waren bestückten Transporteinheiten, welche vom Verteilsystem 5 über den Umlaufförderer 6.1 an den Speicher 3 verteilt werden. Die Kommissionieranlage 100 umfasst weitere sechzehn Speicher, Batchpuffer und Matrix-Sortierer, welche nicht in der Figur 1 gezeigt sind, aber vom Verteilsystem 5 versorgt werden. Der Speicher 3 umfasst eine Mehrzahl von linearen Speicherstrecken 31, welche als Gravitationsstrecken ausgebildet sind. Der Batchpuffer 1 umfasst lineare Speicherstrecken 11, in welche jeweils ein Batch oder zwei Batches einspeicherbar ist bzw. sind. Die Speicherstrecken 31 des Speichers 3 sind an den jeweiligen Ausgängen durch einen Umlaufförderer 6.2 mit den Eingängen der Speicherstrecken 1 1 des Batchpuffers 1 verbunden.

Vom Batchpuffer 1 ruft der Matrix-Sortierer 2 die Batches sequentiell ab. Der Matrix-Sortierer2 ist ein dreistufiger 8³ - Sorter mit drei Sortierstufen 21.1, 21.2, 21.3, welche durch einen als Umlaufförderer ausgebildeten Matrixförderer 22 verbunden sind. Die Sortierstufen 21.1, 21.2, 21.3 weisen jeweils acht lineare Pufferstrecken 21.11, 21.21, 21.31 auf. Die Pufferstrecken 21.11, 21.21, 21.31 sind als Gravitationsstrecken ausgebildet. Der Matrixförderer 22 verbindet zudem die Ausgänge der Speicherstrecken 11 des Batchpuffers 1 mit den Sortierstufen 21.1, 21.2, 21.3, insbesondere mit der ersten Sortierstufe 21.1, und führt die mit Waren bestückten Transporteinheiten jeweils einer Sortierstufe 21.1, 21.2, 21.3 zu und wieder von der jeweiligen Sortierstufe 21.1, 21.2, 21.3 weg.

Ferner verbindet der Matrixförderer 22 den Matrix-Sortierer 2 mit dem Packpuffer 4, so dass die sortierten Waren bzw. die mit Waren bestückten Transporteinheiten vom Matrix-Sortierer 2 dem Packpuffer 4 zugeführt werden können. Vom Packpuffer 4 führt ein weiterer Umlaufförderer 6.3 die sortierten Waren bzw. die mit Waren bestückten Transporteinheiten weg.

Eine übergeordnete Steuerung 7 steuert dynamisch die Fördergeschwindigkeit des Matrixförderers 22 derart, dass die Fördergeschwindigkeit vom Gewicht der geförderten bestückten Transporteinheiten eines Batches abhängt. Die Steuerung 7 steuert dabei die Fördergeschwindigkeit des Matrixförderers 22 derart, dass die Fördergeschwindigkeit innerhalb eines Batches konstant ist, d.h. die Fördergeschwindigkeit wird lediglich von Batch zu Batch angepasst.

Zum Beispiel kann ein Gesamtauftrag wie folgt aussehen: 70% der mit Waren des Gesamtauftrags bestückten Transporteinheiten weisen eine Masse von <2.5 kg auf. Die mit den schwersten Waren bestückten Transporteinheiten weisen eine Masse von 9 kg auf. Die Umlaufförderer 6.1, 6.2, 6.3 werden in Anpassung auf die schwerste Masse von 9 kg auf eine Fördergeschwindigkeit von 0.5 m/s und eine Kommissionierleistung bzw. Durchsatz von 4200 Transporteinheiten/h eingestellt. Für die Umlaufförderer 6.1, 6.2, 6.3 resultiert aus einer Einstellung auf einen Durchsatz von 4200 Transporteinheiten/h effektiv ein Netto-Durchsatz von 4200 Transporteinheiten/h, d.h.es ist keine Reduktion der Kommissionierleistung vorhanden. Für den Matrix-Sortierer 2 ergibt sich bei dieser Einstellung hingegen eine Reduktion auf einen Netto-Durchsatz von 3200 Transporteinheiten/h, was zu einer Begrenzung der gesamten Kommissionierleistung führt. Bei Batches mit bestückten Transporteinheiten mit einer Masse von <2.5 kg stellt die Steuerung 7 daher die Fördergeschwindigkeit des Matrixförderers 22 auf 0.75 m/s und den Durchsatz auf 6300 Transporteinheiten/h ein, was für den Matrix-Sortierer einen Netto-Durchsatz von 4200 Transporteinheiten/h ergibt. Für einen Grossteil der Waren kann somit durch die dynamische Steuerung der Fördergeschwindigkeit des Matrixförderers 22 ein einheitlicher Netto-Durchsatz über die gesamte Kommissionieranlage 100 erreicht werden. Sobald ein Batch mit mindestens einer bestückten Transporteinheit mit einer Masse von >2.5 kg ansteht, stellt die Steuerung 7 die Fördergeschwindigkeit wieder auf 0.5 m/s zurück, bis der Batch abgearbeitet und im Packpuffer 4 eingefahren ist. Anschliessend kann die Steuerung 7 die Fördergeschwindigkeit wieder auf 0.75 m/s erhöhen, bis wieder ein Batch mit mindestens einer bestückten Transporteinheit mit einer Masse von >2.5 kg ansteht. Auf diese Weise kann aus dem Matrix-Sortierer 2 ein dynamischer Sortierer gebildet werden.

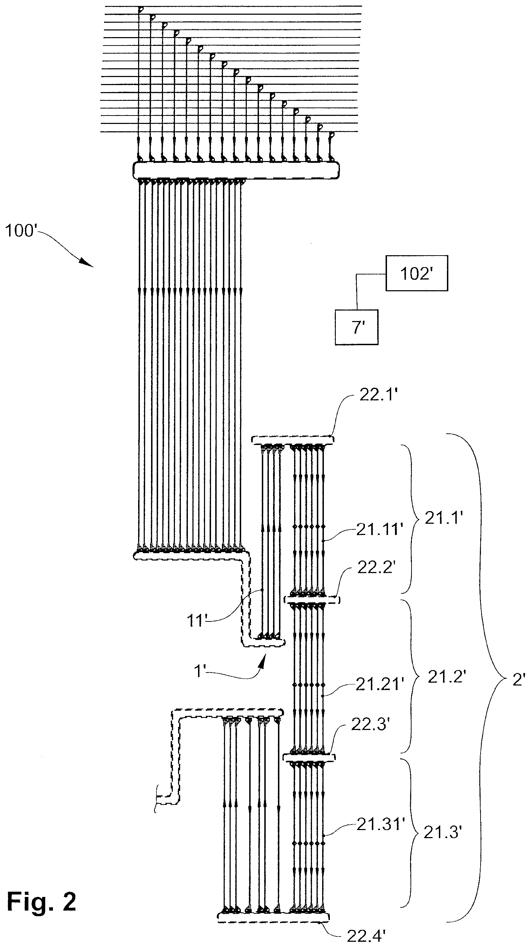

Figur 2 zeigt eine schematische Darstellung einer weiteren Ausführungsform einer Kommissionieranlage 100' mit einem Matrix-Sortierer 2', welcher als dreistufiger 6³ - Sorter mit drei Sortierstufen 21.1', 21.2', 21.3' ausgebildet ist. Der Matrix-Sortierer 2' weist vier Matrixförderer 22.1', 22.2', 22.3', 22.4' auf. Der erste Matrixförderer 22.1' ist der ersten Sortierstufe 21.1' zugeordnet und verbindet die Ausgänge der Speicherstrecken 11' des Batchpuffers 1' mit der ersten Sortierstufe 21.1'. Der zweite Matrixförderer 22.2' ist der ersten Sortierstufe 21.1' und der zweiten Sortierstufe 21.2' zugeordnet und verbindet die Ausgänge der Pufferstrecken 21.11' der ersten Sortierstufe 21.1' mit den Eingängen der Pufferstrecken 21.21' der zweiten Sortierstufe 21.2'. Der dritte Matrixförderer 22.3' ist der zweiten Sortierstufe 21.2' und der dritten Sortierstufe 21.3' zugeordnet und verbindet die Ausgänge der Pufferstrecken 21.21' der zweiten Sortierstufe 21.2' mit den Eingängen der Pufferstrecken 21.31' der dritten Sortierstufe 21.3'. Der vierte Matrixförderer 22.4' schliesslich verbindet die Ausgänge der Pufferstrecken 21.31' mit dem Packpuffer 4'.

Die Steuerung 7' steuert die Fördergeschwindigkeiten jedes Matrixförderers 22.1'-22.4' individuell. Zum Beispiel kann die Steuerung 7' aufgrund der grösseren Anzahl von gleichzeitig involvierten Weichen während dem Sortiervorgang die Fördergeschwindigkeiten der inneren Matrixförderer 22.2' und 22.3' tiefer einstellen als die Fördergeschwindigkeiten der äusseren Matrixförderer 22.1' und 22.4', um die Fehleranfälligkeit zu reduzieren. In einem weiteren Beispiel kann die Steuerung 7' den ersten und zweiten Matrixförderer 22.1' und 22.2' mit einer höheren Fördergeschwindigkeit als die Fördergeschwindigkeit des dritten und vierten Matrixförderers 22.3' und 22.4' einstellen, falls sich ein Batch mit schweren Waren in der dritten Sortierstufe 21.3' befindet und ein nächster Batch mit leichten Waren in die erste Sortierstufe 21.1' einfährt.

Mit der Steuerung 7' ist eine Datenbank 102' verbunden, von welcher die Steuerung die Gewichtswerte der in den Matrix-Sortierer 2' einfahrenden Transporteinheiten erhält. Vor dem Matrix-Sortierer 2' ist zudem eine Auslesevorrichtung (nicht gezeigt in der Figur 2) angeordnet, welche mittels an den Transporteinheiten angebrachten Identifikationselementen die in den Matrix-Sortierer 2' einfahrenden Transporteinheiten identifiziert und mit den von der Datenbank 102' erhaltenen Gewichtswerten verknüpft.

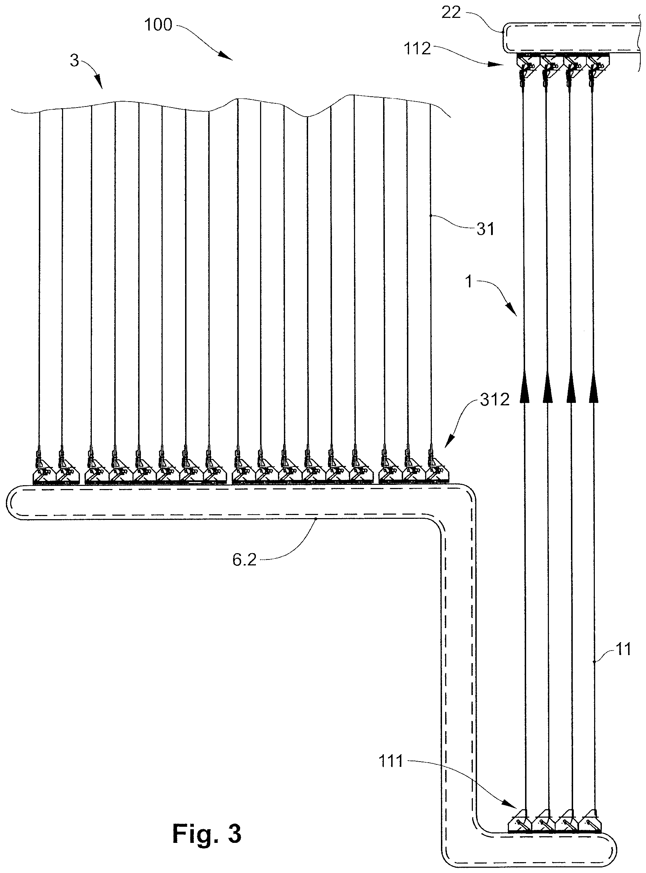

Figur 3 zeigt eine vergrösserte Ansicht eines Ausschnitts der Kommissionieranlage 100 aus Fig. 1. An den Ausgängen der Speicherstrecken 31 des Speichers 3 sind Ausgangsweichen 312 angeordnet, über welche die Speicherstrecken 31 mit dem Umlaufförderer 6.2 verbunden sind. An den Eingängen der Speicherstrecken 11 des Batchpuffers 1 sind Eingangsweichen 111 angeordnet, über welche der Umlaufförderer 6.2 mit den Speicherstrecken 11 verbunden ist. An den Ausgängen der Speicherstrecken 11 des Batchpuffers 1 sind Ausgangsweichen 112 angeordnet, über welche die Speicherstrecken 11 mit dem Matrixförderer 22 verbunden sind.

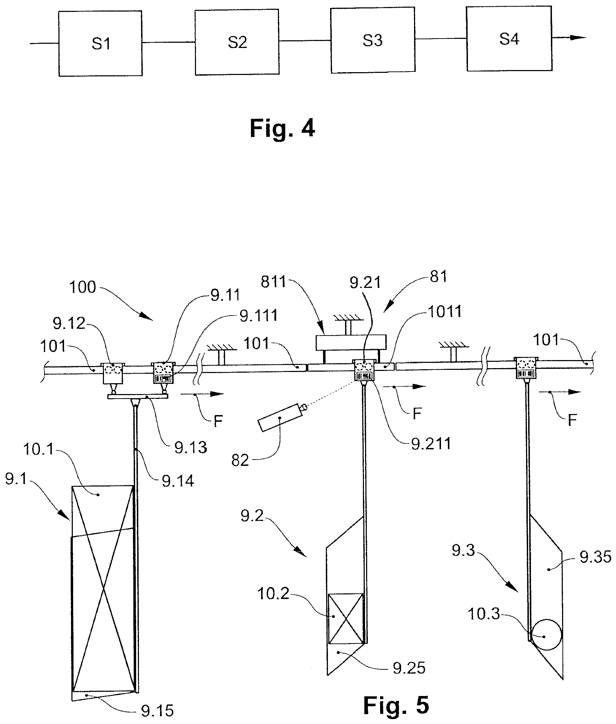

Figur 4 zeigt ein Flussdiagramm von Schritten einer Ausführungsform eines Verfahrens zum Betrieb einer Kommissionieranlage. In Schritt S1 werden die Waren in einer Aufgabestation in Transporteinheiten aufgegeben. In Schritt S2 werden die mit den Waren bestückten Transporteinheiten in einer Wiegevorrichtung gewogen und mittels einer Auslesevorrichtung identifiziert. Die in der Wiegevorrichtung erhaltenen Informationen werden an eine übergeordnete Steuerung übermittelt. In Schritt S3 werden die gewogenen und identifizierten Transporteinheiten mittels einem Verteilsystem und über einen Speicher einem Batchpuffer zugeführt. In Schritt S4 werden die Transporteinheiten batchweise vom Batchpuffer abgerufen und in einem Matrix-Sortierer sortiert.

Figur 5 zeigt einen Ausschnitt einer Ausführungsform einer Kommissionieranlage 100 mit einer Wiegevorrichtung 81 sowie Ausführungsformen von Transporteinheiten 9.1, 9.2, 9.3. Die Wiegevorrichtung 81 kann z.B. vor dem Speicher 3 in Fig. 1 angeordnet sein, z.B. im Umlaufförderer 6.1. Die Kommissionieranlage 100 weist eine Schiene 101 auf, an welcher die Transporteinheiten 9.1-9.3 hängend förderbar sind. Die Transporteinheit 9.1 weist hierzu zwei Laufwagen 9.11, 9.12 auf, welche über einen Balken 9.13 zu einem Trolley verbunden sind. Mit dem Balken 9.13 ist über ein Gestell 9.14 eine Aufnahmeeinheit 9.15 verbunden, in welche eine Ware 10.1 aufgenommen ist. Die Förderrichtung ist mittels dem Pfeil F gezeigt. Am vorderen Laufwagen 9.11 ist ein Identifikationselement in Form eines Barcodes 9.111 angeordnet, mittels welchem die Transporteinheit 9.1 identifiziert werden kann.

Die Wiegevorrichtung 81 umfasst ein Schienenstück 1011, welches getrennt von der Schiene 101 ausgebildet ist. Das Schienenstück 1011 ist mit einer Haltevorrichtung 811 verbunden, welche das Schienenstück 1011 zusammen mit der Transporteinheit 9.2 wägt. Die Transporteinheit 9.2 weist einen Laufwagen 9.21 auf, welcher sich in der gezeigten Konfiguration zur Wägung am Schienenstück 1011 befindet. Die Wiegevorrichtung 81 übermittelt das ermittelte Gewicht an eine Steuerung. Am Laufwagen 9.21 ist ferner ein Barcode 9.211 angeordnet, welcher mit einer Auslesevorrichtung 82 ausgelesen werden kann. Die Auslesevorrichtung 82 übermittelt die ausgelesene Identifikation an die Steuerung. Die Steuerung kann unter Verwendung des ermittelten Gewichts und der Identifikation der bestückten Transporteinheiten die Fördergeschwindigkeit des Matrixförderers steuern.

Die Transporteinheit 9.2 umfasst weiter eine Aufnahmeeinheit 9.25, in welche eine Ware 10.2 aufgenommen ist. Nach der Wägung der Transporteinheit 9.2 im Schienenstück 1011 fährt der Laufwagen 9.21 wieder aus dem Schienenstück 1011 hinaus in Richtung der Förderrichtung F.

Weiter ist in der Figur 5 eine weitere Ausführungsform einer Transporteinheit 9.3 gezeigt, mit einer Aufnahmeeinheit 9.35, in welche eine kugelförmige Ware 10.3 aufgenommen ist. Im Vergleich zu den Transporteinheiten 9.1 und 9.2, bei welchen die Aufnahmeeinheiten 9.15, 9.25 entgegen der Förderrichtung F orientiert sind, ist die Aufnahmeeinheit 9.35 zur Förderrichtung F hin orientiert.

Weiter ist in der Figur 5 zu erkennen, dass die bestückten Transporteinheiten 9.1 - 9.3 je nach Grösse der Ware 10.1-10.3 eine unterschiedliche Ausdehnung in Förderrichtung F aufweisen. In gewissen Ausführungsformen kann mittels eines nicht in der Figur 5 gezeigten optischen Sensors (umfassend z.B. Lichtschranken) die Ausdehnung der bestückten Transporteinheiten 9.1-9.3 ermittelt und der Steuerung übermittelt werden. Die Steuerung kann die Fördergeschwindigkeit des Matrixförderers dann auf die Ausdehnung der bestückten Transporteinheiten anpassen, wobei die Fördergeschwindigkeit in der Regel mit zunehmender Ausdehnung der bestückten Transporteinheiten abnimmt.

## Patentansprüche

1. Verfahren zum Betrieb einer Kommissionieranlage (100, 100'), umfassend: Bereitstellen von zu Batches zusammengestellten Waren (10.1-10.3) in einem Batchpuffer (1,1'), Sortieren der Waren (10.1-10.3) in einem Matrix-Sortierer (2, 2'), wobei die Waren (10.1-10.3) in der Kommissionieranlage (100, 100') durch eine Mehrzahl von Transporteinheiten (9.1-9.3) gefördert werden, welche jeweils eine Aufnahmeeinheit (9.15, 9.25, 9.35) zurAufnahme der Waren (10.1-10.3) aufweisen, und die Transporteinheiten (9.1-9.3) im Matrix-Sortierer (2, 2') mindestens abschnittsweise durch einen Matrixförderer (22, 22.1'-22.4') gefördert werden, **dadurch gekennzeichnet, dass** eine Steuerung (7, 7') die Fördergeschwindigkeit des Matrixförderers (22, 22.1'-22.4') dynamisch derart steuert, dass die Fördergeschwindigkeit von mindestens einem Parameter der geförderten Transporteinheiten (9.1-9.3) und/oder Waren (10.1-10.3) abhängt und die Waren (10.1-10.3) im Matrix-Sortierer (2, 2') batchweise sortiert werden.

2. Verfahren nach Anspruch 1, **dadurch gekennzeichnet, dass** die Steuerung (7, 7') die Fördergeschwindigkeit des Matrixförderers (22, 22.1'-22.4') derart steuert, dass die Fördergeschwindigkeit innerhalb eines Batches jeweils konstant ist.

3. Verfahren nach Anspruch 1 oder 2, **dadurch gekennzeichnet, dass** die Steuerung (7, 7') die Fördergeschwindigkeit des Matrixförderers (22, 22.1 '-22.4') in Abhängigkeit des Gewichts von mindestens einer der geförderten Transporteinheiten (9.1 -9.3) und/oder Waren (10.1-10.3) steuert, wobei die Fördergeschwindigkeit des Matrixförderers (22, 22.1'-22.4') mit abnehmendem Gewicht der Transporteinheiten (9.1-9.3) und/oder Waren (10.1-10.3) erhöht wird, wobei die Steuerung (7, 7') die Fördergeschwindigkeit des Matrixförderers (22, 22.1'-22.4') vorzugsweise in Abhängigkeit des Gewichts der schwersten Transporteinheit (9.1-9.3) und/oder Ware (10.1-10.3) eines Batches steuert.

4. Verfahren nach einem der Ansprüche 1 bis 3, **dadurch gekennzeichnet, dass** die Steuerung (7, 7') die Fördergeschwindigkeit des Matrixförderers (22, 22.1'-22.4') in Abhängigkeit der Grösse von mindestens einer der geförderten Transporteinheiten (9.1-9.3) und/oder Waren (10.1-10.3) steuert, wobei die Fördergeschwindigkeit des Matrixförderers (22, 22.1'-22.4') mit abnehmender Grösse der Transporteinheiten (9.1-9.3) und/oder Waren (10.1-10.3) erhöht wird.

5. Verfahren nach einem der Ansprüche 1 bis 4, **dadurch gekennzeichnet, dass** die Kommissionieranlage (100, 100'), vorzugsweise in einer Aufgabestation und/oder in einer dem Matrix-Sortierer (2, 2') nachgeschalteten Packstation, weitere Förderer (6.1-6.3), vorzugsweise Umlaufförderer, aufweist, welche die Transporteinheiten (9.1-9.3) mit einer konstanten Fördergeschwindigkeit fördern und die Steuerung (7, 7') die Fördergeschwindigkeit des Matrixförderers (22, 22.1'-22.4') derart steuert, dass die Fördergeschwindigkeit des Matrixförderers (22, 22.1'-22.4') in mindestens einem Batch höher als die konstante Fördergeschwindigkeit der weiteren Förderer (6.1-6.3) ist.

6. Verfahren nach einem der Ansprüche 1 bis 5, **dadurch gekennzeichnet, dass** die Parameter, vorzugsweise Gewicht und/oder Grösse, der in den Matrix-Sortierer (2, 2') einfahrenden Transporteinheiten (9.1-9.3) und/oder Waren (10.1-10.3) durch eine Messvorrichtung (81, 82) ermittelt und der Steuerung (7, 7') übermittelt werden.

7. Verfahren nach einem der Ansprüche 1 bis 6, **dadurch gekennzeichnet, dass** die Steuerung (7') die Parameter, vorzugsweise Gewicht und/oder Grösse, der in den Matrix-Sortierer (2') einfahrenden Transporteinheiten und/oder Waren von einer Datenbank (102') erhält.

8. Verfahren nach einem der Ansprüche 1 bis 7, **dadurch gekennzeichnet, dass** der Matrix-Sortierer (2) eine Mehrzahl von Sortierstufen (21.1-21.3) umfasst, wobei der Matrixförderer (22) die Transporteinheiten (9.1-9.3) jeweils einer Sortierstufe (21.1-21.3) zu- und wieder von der Sortierstufe (21.1-21.3) wegführt.

9. Kommissionieranlage (100, 100'), umfassend einen Batchpuffer (1, 1') zur Bereitstellung von zu Batches zusammengestellten Waren (10.1-10.3), einen Matrix-Sortierer (2, 2'), eine Mehrzahl von Transporteinheiten (9.1-9.3), welche jeweils eine Aufnahmeeinheit (9.15, 9.25, 9.35) zurAufnahme der Waren (10.1-10.3) aufweisen, der Matrix-Sortierer (2, 2') umfassend mindestens einen Matrixförderer (22, 22.1'-22.4') zum Fördern der Transporteinheiten (9.1 -9.3), **dadurch gekennzeichnet, dass** die Kommissionieranlage (100, 100') eine Steuerung (7, 7') aufweist, welche ausgelegt ist, die Fördergeschwindigkeit des Matrixförderers (22, 22.1'-22.4') dynamisch derart zu steuern, dass die Fördergeschwindigkeit von mindestens einem Parameter der geförderten Transporteinheiten (9.1-9.3) und/oder Waren (10.1-10.3) abhängt und dass der Matrix-Sortierer (2, 2') zum batchweisen Sortieren der Waren (10.1-10.3) ausgelegt ist.

10. Kommissionieranlage (100, 100') nach Anspruch 9, **dadurch gekennzeichnet, dass** eine Transporteinheit (9.1-9.3) jeweils mindestens einen in einer Schiene (101), vorzugsweise hängend, förderbaren Laufwagen (9.11, 9.12, 9.21) umfasst und die Aufnahmeeinheit (9.15, 9.25, 9.35) jeweils mit dem Laufwagen (9.11, 9.12, 9.21) verbunden ist.

11. Kommissionieranlage (100, 100') nach Anspruch 9 oder 10, **dadurch gekennzeichnet, dass** die Kommissionieranlage (100, 100'), vorzugsweise in einer Aufgabestation und/oder in einer dem Matrix-Sortierer (2, 2') nachgeschalteten Packstation, weitere Förderer (6.1-6.3), vorzugsweise Umlaufförderer, aufweist, welche ausgelegt sind, die Transporteinheiten (9.1-9.3) mit einer konstanten Fördergeschwindigkeit zu fördern, wobei die Steuerung (7, 7') ausgelegt ist, die Fördergeschwindigkeit des Matrixförderers (22, 22.1'-22.4') derart zu steuern, dass die Fördergeschwindigkeit des Matrixförderers (22, 22.1'-22.4') in mindestens einem Batch höher als die konstante Fördergeschwindigkeit der weiteren Förderer (6.1-6.3) ist.

12. Kommissionieranlage (100, 100') nach einem der Ansprüche 9 bis 11, **dadurch gekennzeichnet, dass** der Matrixförderer (22, 22.1'-22.4') ein Umlaufförderer ist, welcher ausgelegt ist, die Transporteinheiten (9.1-9.3) einer Sortierstufe (21.1-21.3, 21.1'-21.3') zu- und/oder von einer Sortierstufe (21.1-21.3, 21.1'-21.3') wegzuführen.

13. Kommissionieranlage (100, 100') nach einem der Ansprüche 9 bis 12, **dadurch gekennzeichnet, dass** eine Sortierstufe (21 .1 -21 .3, 21.1'-21 .3') des Matrix-Sortierers (2, 2') eine Mehrzahl von linearen Pufferstrecken (21.11, 21.21, 21.31, 21.11', 21.21', 21.31') aufweist, welche durch Weichen mit dem Matrixförderer (22, 22.1'-22.4') verbunden sind, wobei die Pufferstrecken (21.11, 21.21, 21.31, 21.11', 21.21', 21.31') vorzugsweise als Gravitationsstrecken mit einem Gefälle derart ausgebildet sind, dass die Transporteinheiten (9.1-9.3) in den Gravitationsstrecken schwerkraftbedingt förderbar sind.

14. Kommissionieranlage (100, 100') nach einem der Ansprüche 9 bis 13, **dadurch gekennzeichnet, dass** der Batchpuffer (1, 1') eine Mehrzahl von linearen Speicherstrecken (11, 11') aufweist, in welche vorzugsweise jeweils ein Batch oder zwei Batches einspeicherbar sind.

15. Kommissionieranlage (100, 100') nach einem der Ansprüche 9 bis 14, **dadurch gekennzeichnet, dass** vor dem Batchpuffer (1, 1') ein Speicher (3) angeordnet ist, welcher eine Mehrzahl von linearen Speicherstrecken (31) aufweist.

16. Kommissionieranlage (100, 100') nach einem der Ansprüche 9bis 15, **dadurch gekennzeichnet, dass** vor dem Matrix-Sortierer (2, 2') mindestens eine Messvorrichtung (81, 82) angeordnet ist, welche ausgebildet ist, die Parameter, vorzugsweise das Gewicht und/oder die Grösse, der in den Matrix-Sortierer (2, 2') einfahrenden Transporteinheiten (9.1-9.3) und/oder Waren (10.1-10.3) zu ermitteln und der Steuerung (7, 7') zu übermitteln.

17. Kommissionieranlage (100') nach einem der Ansprüche 9 bis 16, **dadurch gekennzeichnet, dass** die Kommissionieranlage (100') eine Datenbank (102') aufweist, in welcher die Parameter, vorzugsweise das Gewicht und/oder die Grösse, der in den Matrix-Sortierer (2') einfahrenden Transporteinheiten und/oder Waren, hinterlegt sind.

18. Kommissionieranlage (100') nach einem der Ansprüche 9 bis 17, **dadurch gekennzeichnet, dass** der Matrix-Sortierer (2') eine Mehrzahl von Sortierstufen (21.1'-21.3') und eine Mehrzahl von Matrixförderern (22.1'-22.4') umfasst, welche jeweils einer Sortierstufe (21.1'-21.3') oder zwei Sortierstufen (21.1'-21.3') zugeordnet sind und die Steuerung (7') ausgelegt ist, die Fördergeschwindigkeit jedes Matrixförderers (22.1 '-22.4') individuell zu steuern.

## Claims

1. Method for operating an order-picking system (100, 100'), including: providing goods (10.1-10.3) gathered in batches in a batch buffer (1, 1'), sorting of the goods (10.1-10.3) in a matrix sorter (2, 2'), wherein the goods (10.1-10.3) are conveyed in the order-picking system (100, 100') by a multiplicity of transport units (9.1-9.3) which comprise in each case a receiving unit (9.15, 9.25, 9.35) for receiving the goods (10.1-10.3), and the transport units (9.1-9.3) in the matrix sorter (2, 2') are conveyed at least in sections by a matrix conveyor (22, 22.1'-22.4'), **characterized in that** a control unit (7, 7') dynamically controls the conveying speed of the matrix conveyor (22, 22.1'-22.4') in such a manner that the conveying speed is dependent on at least one parameter of the conveyed transport units (9.1-9.3) and/or goods (10.1-10.3), and the goods (10.1-10.3) are sorted in a batch-wise manner in the matrix sorter (2, 2').

2. Method according to Claim 1, **characterized in that** the control unit (7, 7') controls the conveying speed of the matrix conveyor (22, 22.1'-22.4') in such a manner that the conveying speed within a batch is in each case constant.

3. Method according to Claim 1 or 2, **characterized in that** the control unit (7, 7') controls the conveying speed of the matrix conveyor (22, 22.1'-22.4') as a function of the weight of at least one of the conveyed transport units (9.1-9.3) and/or goods (10.1-10.3), wherein the conveying speed of the matrix conveyor (22, 22.1'-22.4') is increased with decreasing weight of the transport units (9.1-9.3) and/or goods (10.1-10.3), wherein the control unit (7, 7') preferably controls the conveying speed of the matrix conveyor (22, 22.1'-22.4') as a function of the weight of the heaviest transport unit (9.1-9.3) and/or good (10.1-10.3) of a batch.

4. Method according to any one of Claims 1 to 3, **characterized in that** the control unit (7, 7') controls the conveying speed of the matrix conveyor (22, 22.1'-22.4') as a function of the size of at least one of the conveyed transport units (9.1-9.3) and/or goods (10.1-10.3), wherein the conveying speed of the matrix conveyor (22, 22.1'-22.4') is increased with decreasing size of the transport units (9.1-9.3) and/or goods (10.1-10.3).

5. Method according to any one of Claims 1 to 4, **characterized in that** the order-picking system (100, 100') comprises, preferably in a loading station and/or in a packing station downstream of the matrix sorter (2, 2'), further conveyors (6.1-6.3), preferably continuous conveyors, which convey the transport units (9.1-9.3) with a constant conveying speed, and the control unit (7, 7') controls the conveying speed of the matrix conveyor (22, 22.1'-22.4') in such a manner that the conveying speed of the matrix conveyor (22, 22.1'-22.4') in at least one batch is higher than the constant conveying speed of the further conveyors (6.1-6.3).

6. Method according to any one of Claims 1 to 5, **characterized in that** the parameters, preferably weight and/or size, of the transport units (9.1-9.3) and/or goods (10.1-10.3) travelling into the matrix sorter (2, 2') are determined by a measuring device (81, 82) and transmitted to the control unit (7, 7').

7. Method according to any one of Claims 1 to 6, **characterized in that** the control unit (7') receives the parameters, preferably weight and/or size, of the transport units and/or goods travelling into the matrix sorter (2') from a database (102').

8. Method according to any one of Claims 1 to 7, **characterized in that** the matrix sorter (2) includes a multiplicity of sorting stages (21.1-21.3), wherein the matrix conveyor (22) guides the transport units (9.1-9.3) in each case towards one sorting stage (21.1-21.3) and again away from the sorting stage (21.1-21.3).

9. Order-picking system (100, 100'), including a batch buffer (1, 1') for the provision of goods (10.1-10.3) gathered in batches, a matrix sorter (2, 2'), a multiplicity of transport units (9.1-9.3) which comprise in each case a receiving unit (9.15, 9.25, 9.35) for receiving the goods (10.1-10.3), the matrix sorter (2, 2') including at least one matrix conveyor (22, 22.1'-22.4') for conveying the transport units (9.1-9.3), **characterized in that** the order-picking system (100, 100') comprises a control unit (7, 7') which is configured to dynamically control the conveying speed of the matrix conveyor (22, 22.1'-22.4') in such a manner that the conveying speed is dependent on at least one parameter of the conveyed transport units (9.1-9.3) and/or goods (10.1-10.3), and **in that** the matrix sorter (2, 2') is configured for batch-wise sorting of the goods (10.1-10.3).

10. Order-picking system (100, 100') according to Claim 9, **characterized in that** a transport unit (9.1-9.3) includes in each case at least one conveyable carriage (9.11, 9.12, 9.21), preferably suspended in a rail (101), and the receiving unit (9.15, 9.25, 9.35) is connected in each case to the carriage (9.11, 9.12, 9.21).

11. Order-picking system (100, 100') according to Claim 9 or 10, **characterized in that** the order-picking system (100, 100') comprises, preferably in a loading station and/or in a packing station downstream of the matrix sorter (2, 2'), further conveyors (6.1-6.3), preferably continuous conveyors, which are configured to convey the transport units (9.1-9.3) with a constant conveying speed, wherein the control unit (7, 7') is configured to control the conveying speed of the matrix conveyor (22, 22.1'-22.4') in such a manner that the conveying speed of the matrix conveyor (22, 22.1'-22.4') in at least one batch is higher than the constant conveying speed of the further conveyors (6.1-6.3).

12. Order-picking system (100, 100') according to any one of Claims 9 to 11, **characterized in that** the matrix conveyor (22, 22.1'-22.4') is a continuous conveyor which is configured to guide the transport units (9.1-9.3) towards a sorting stage (21.1-21.3, 21.1'-21.3') and/or away from a sorting stage (21.1-21.3, 21.1'-21.3').

13. Order-picking system (100, 100') according to any one of Claims 9 to 12, **characterized in that** a sorting stage (21.1-21.3, 21.1'-21.3') of the matrix sorter (2, 2') comprises a multiplicity of linear buffer sections (21.11, 21.21, 21.31, 21.11', 21.21', 21.31') which are connected by switch points to the matrix conveyor (22, 22.1'-22.4'), wherein the buffer sections (21.11, 21.21, 21.31, 21.11', 21.21', 21.31') are preferably formed as gravitation sections with a slope in such a manner that the transport units (9.1-9.3) can be conveyed by gravity in the gravitation sections.

14. Order-picking system (100, 100') according to any one of Claims 9 to 13, **characterized in that** the batch buffer (1, 1') comprises a multiplicity of linear storage sections (11, 11') in which preferably in each case one batch or two batches can be stored.

15. Order-picking system (100, 100') according to any one of Claims 9 to 14, **characterized in that** a store (3) is arranged upstream of the batch buffer (1, 1'), which store (3) comprises a multiplicity of linear storage sections (31).

16. Order-picking system (100, 100') according to any one of Claims 9 to 15, **characterized in that** at least one measuring device (81, 82) is arranged upstream of the matrix sorter (2, 2'), which measuring device (81, 82) is configured to determine the parameters, preferably the weight and/or the size, of the transport units (9.1-9.3) and/or goods (10.1-10.3) travelling into the matrix sorter (2, 2') and transmit them to the control unit (7, 7').

17. Order-picking system (100') according to any one of Claims 9 to 16, **characterized in that** the order-picking system (100') comprises a database (102') in which the parameters, preferably the weight and/or the size, of the transport units and/or goods travelling into the matrix sorter (2') are stored.

18. Order-picking system (100') according to any one of Claims 9 to 17, **characterized in that** the matrix sorter (2') includes a multiplicity of sorting stages (21.1'-21.3') and a multiplicity of matrix conveyors (22.1'-22.4') which are assigned in each case to a sorting stage (21.1'-21.3') or two sorting stages (21.1'-21.3') and the control unit (7') is configured to individually control the conveying speed of each matrix conveyor (22.1'-22.4').

## Revendications

1. Procédé permettant de faire fonctionner une installation de préparation de commandes (100, 100'), comprenant les étapes consistant à : fournir des marchandises (10.1 à 10.3) regroupées par lots dans un tampon de lots (1, 1'), trier les marchandises (10.1 à 10.3) dans un trieur matriciel (2, 2'), les marchandises (10.1 à 10.3) étant acheminées dans l'installation de préparation de commandes (100, 100') par une pluralité d'unités de transport (9.1 à 9.3) qui présentent respectivement une unité de réception (9.15, 9.25, 9.35) destinée à recevoir les marchandises (10.1 à 10.3), et les unités de transport (9.1 à 9.3) étant acheminées dans le trieur matriciel (2, 2') au moins par endroits par un convoyeur matriciel (22, 22.1' à 22.4'),
**caractérisé en ce qu'**un dispositif de commande (7, 7') commande la vitesse de convoyage du convoyeur matriciel (22, 22.1' à 22.4') dynamiquement de telle sorte que la vitesse de convoyage dépend d'au moins un paramètre des unités de transport (9.1 à 9.3) et/ou des marchandises (10.1 à 10.3) acheminées, et les marchandises (10.1 à 10.3) sont triées par lot dans le trieur matriciel (2, 2').

2. Procédé selon la revendication 1, **caractérisé en ce que** le dispositif de commande (7, 7') commande la vitesse de convoyage du convoyeur matriciel (22, 22.1' à 22.4') de telle sorte que la vitesse de convoyage est respectivement constante à l'intérieur d'un lot.

3. Procédé selon la revendication 1 ou 2, **caractérisé en ce que** le dispositif de commande (7, 7') commande la vitesse de convoyage du convoyeur matriciel (22, 22.1' à 22.4') en fonction du poids d'au moins l'une des unités de transport (9.1 à 9.3) et/ou des marchandises (10.1 à 10.3) acheminées, la vitesse de convoyage du convoyeur matriciel (22, 22.1' à 22.4') étant augmentée à mesure que le poids des unités de transport (9.1 à 9.3) et/ou des marchandises (10.1 à 10.3) diminue, le dispositif de commande (7, 7') commandant la vitesse de convoyage du convoyeur matriciel (22, 22.1' à 22.4') de préférence en fonction du poids de l'unité de transport (9.1 à 9.3) et/ou de la marchandise (10.1 à 10.3) la/les plus lourde(s) d'un lot.

4. Procédé selon l'une quelconque des revendications 1 à 3, **caractérisé en ce que** le dispositif de commande (7, 7') commande la vitesse de convoyage du convoyeur matriciel (22, 22.1' à 22.4') en fonction de la taille d'au moins l'une des unités de transport (9.1 à 9.3) et/ou des marchandises (10.1 à 10.3) acheminées, la vitesse de convoyage du convoyeur matriciel (22, 22.1' à 22.4') étant augmentée à mesure que la taille des unités de transport (9.1 à 9.3) et/ou des marchandises (10.1 à 10.3) diminue.

5. Procédé selon l'une quelconque des revendications 1 à 4, **caractérisé en ce que** l'installation de préparation de commandes (100, 100') présente, de préférence dans une station de chargement et/ou dans une station d'emballage en aval du trieur matriciel (2, 2'), d'autres convoyeurs (6.1 à 6.3), de préférence des convoyeurs sans fin, qui acheminent les unités de transport (9.1 à 9.3) à une vitesse de convoyage constante, et le dispositif de commande (7, 7') commande la vitesse de convoyage du convoyeur matriciel (22, 22.1' à 22.4') de telle sorte que la vitesse de convoyage du convoyeur matriciel (22, 22.1' à 22.4') dans au moins un lot est supérieure à la vitesse de convoyage constante des autres convoyeurs (6.1 à 6.3).

6. Procédé selon l'une quelconque des revendications 1 à 5, **caractérisé en ce que** les paramètres, de préférence le poids et/ou la taille des unités de transport (9.1 à 9.3) et/ou des marchandises (10.1 à 10.3) entrant dans le trieur matriciel (2, 2'), de préférence le poids et/ou la taille, sont établis par un dispositif de mesure (81, 82) et transmis au dispositif de commande (7, 7').

7. Procédé selon l'une quelconque des revendications 1 à 6, **caractérisé en ce que** le dispositif de commande (7') reçoit les paramètres, de préférence le poids et/ou la taille, des unités de transport et/ou des marchandises entrant dans le trieur matriciel (2') à partir d'une base de données (102').

8. Procédé selon l'une quelconque des revendications 1 à 7, **caractérisé en ce que** le trieur matriciel (2) comprend une pluralité de niveaux de tri (21.1 à 21.3), le convoyeur matriciel (22) rapprochant les unités de transport (9.1 à 9.3) respectivement d'un niveau de tri (21.1à 21.3) et les éloignant à nouveau du niveau de tri (21.1 à 21.3).

9. Installation de préparation de commandes (100, 100'), comprenant un tampon de lots (1, 1') pour fournir des marchandises (10.1 à 10.3) regroupées par lots, un trieur matriciel (2, 2'), une pluralité d'unités de transport (9.1 à 9.3) qui présentent respectivement une unité de réception (9.15, 9.25, 9.35) destinée à recevoir les marchandises (10.1 à 10.3), le trieur matriciel (2, 2') comprenant au moins un convoyeur matriciel (22, 22.1' à 22.4') pour acheminer les unités de transport (9.1 à 9.3),
**caractérisée en ce que** l'installation de préparation de commandes (100, 100') présente un dispositif de commande (7, 7') qui est conçu pour commander la vitesse de convoyage du convoyeur matriciel (22, 22.1' à 22.4') dynamiquement de telle sorte que la vitesse de convoyage dépend d'au moins un paramètre des unités de transport (9.1 à 9.3) et/ou des marchandises (10.1 à 10.3) acheminées, et **en ce que** le trieur matriciel (2, 2') est conçu pour trier les marchandises (10.1 à 10.3) par lot.

10. Installation de préparation de commandes (100, 100') selon la revendication 9, **caractérisée en ce qu'**une unité de transport (9.1 à 9.3) comprend respectivement au moins un chariot (9.11, 9.12, 9.21) pouvant être acheminé dans un rail (101), de préférence en suspension, et l'unité de réception (9.15, 9.25, 9.35) est reliée au chariot (9.11, 9.12, 9.21) respectivement.

11. Installation de préparation de commandes (100, 100') selon la revendication 9 ou 10, **caractérisée en ce que** l'installation de préparation de commandes (100, 100') présente, de préférence dans une station de chargement et/ou dans une station d'emballage en aval du trieur matriciel (2, 2'), d'autres convoyeurs (6.1 à 6.3), de préférence des convoyeurs sans fin, qui sont conçus pour acheminer les unités de transport (9.1 à 9.3) à une vitesse de convoyage constante, le dispositif de commande (7, 7') étant conçu pour commander la vitesse de convoyage du convoyeur matriciel (22, 22.1' à 22.4') de telle sorte que la vitesse de convoyage du convoyeur matriciel (22, 22.1' à 22.4') dans au moins un lot est supérieure à la vitesse de convoyage constante des autres convoyeurs (6.1 à 6.3).

12. Installation de préparation de commandes (100, 100') selon l'une quelconque des revendications 9 à 11, **caractérisée en ce que** le convoyeur matriciel (22, 22.1' à 22.4') est un convoyeur sans fin qui est conçu pour rapprocher les unités de transport (9.1 à 9.3) d'un niveau de tri (21.1à 21.3, 21.1' à 21.3') et/ou pour les éloigner d'un niveau de tri (21.1 à 21.3, 21.1' à 21.3').

13. Installation de préparation de commandes (100, 100') selon l'une quelconque des revendications 9 à 12, **caractérisée en ce qu'**un niveau de tri (21.1 à 21.3, 21.1' à 21.3') du trieur matriciel (2, 2') présente une pluralité de voies tampons linéaires (21.11, 21.21, 21.31, 21.11', 21.21', 21.31') qui sont reliées au convoyeur matriciel (22, 22.1' à 22.4') par des aiguillages, les voies tampons (21.11, 21.21, 21.31, 21.11', 21.21', 21.31') étant de préférence réalisées sous la forme de voies gravitationnelles à pente de telle sorte que les unités de transport (9.1 à 9.3) peuvent être acheminées sur les voies gravitationnelles par la force de gravité.

14. Installation de préparation de commandes (100, 100') selon l'une quelconque des revendications 9 à 13, **caractérisée en ce que** le tampon de lots (1, 1') présente une pluralité de voies de stockage linéaires (11, 11') sur lesquelles de préférence respectivement un lot ou deux lots peut/peuvent être stocké(s).

15. Installation de préparation de commandes (100, 100') selon l'une quelconque des revendications 9 à 14, **caractérisée en ce qu'**avant le tampon de lots (1, 1') , un stockage (3) est disposé qui présente une pluralité de voies de stockage linéaires (31).

16. Installation de préparation de commandes (100, 100') selon l'une quelconque des revendications 9 à 15, **caractérisée en ce qu'**avant le trieur matriciel (2, 2'), au moins un dispositif de mesure (81, 82) est disposé qui est réalisé pour établir les paramètres, de préférence le poids et/ou la taille, des unités de transport (9.1 à 9.3) et/ou des marchandises (10.1 à 10.3) entrant dans le trieur matriciel (2, 2') et pour les transmettre au dispositif de commande (7, 7').

17. Installation de préparation de commandes (100') selon l'une quelconque des revendications 9 à 16, **caractérisée en ce que** l'installation de préparation de commandes (100') présente une base de données (102') dans laquelle sont stockés les paramètres, de préférence le poids et/ou la taille, des unités de transport et/ou des marchandises entrant dans le trieur matriciel (2').

18. Installation de préparation de commandes (100') selon l'une quelconque des revendications 9 à 17, **caractérisée en ce que** le trieur matriciel (2') comprend une pluralité de niveaux de tri (21.1' 21.3') et une pluralité de convoyeurs matriciels (22.1' à 22.4') qui sont respectivement associés à un niveau de tri (21.1' à 21.3') ou à deux niveaux de tri (21.1' à 21.3'), et le dispositif de commande (7') est conçu pour commander individuellement la vitesse de convoyage de chaque convoyeur matriciel (22.1' à 22.4').
